Europäisches Patentamt

European Patent Office

Office européen des brevets

(19)

(11) Veröffentlichungsnummer : **0 253 826 B1**

(12) # EUROPÄISCHE PATENTSCHRIFT

(45) Veröffentlichungstag der Patentschrift :
25.09.91 Patentblatt 91/39

(51) Int. Cl.⁵ : **E04C 5/08, D07B 1/14, G01N 27/20**

(21) Anmeldenummer : **87900135.2**

(22) Anmeldetag : **19.12.86**

(86) Internationale Anmeldenummer :
**PCT/EP86/00768**

(87) Internationale Veröffentlichungsnummer :
**WO 87/04209 16.07.87 Gazette 87/15**

(54) **VERFAHREN ZUR ERMITTLUNG MECHANISCHER FEHLSTELLEN AN BAUELEMENTEN AUS FASERVERBUNDMATERIAL UND EINEN BEWEHRUNGSSTAB ZUR DURCHFÜHRUNG DES VERFAHRENS.**

(30) Priorität : **03.01.86 DE 3600034**

(43) Veröffentlichungstag der Anmeldung :
**27.01.88 Patentblatt 88/04**

(45) Bekanntmachung des Hinweises auf die Patenterteilung :
**25.09.91 Patentblatt 91/39**

(84) Benannte Vertragsstaaten :
**AT CH DE LI**

(56) Entgegenhaltungen :
**EP-A- 0 120 479**
**DE-A- 2 065 706**

(56) Entgegenhaltungen :
**GB-A- 2 152 088**
**LU-A- 56 317**
**US-A- 3 111 569**
**US-A- 4 348 635**

(73) Patentinhaber : **Franke, Lutz, Prof.Dr.-Ing.**
**Mühlenweg 143**
**W-2105 Seevetal - 2 (DE)**

(72) Erfinder : **Franke, Lutz, Prof.Dr.-Ing.**
**Mühlenweg 143**
**W-2105 Seevetal - 2 (DE)**

(74) Vertreter : **Schmidt-Bogatzky, Jürgen, Dr. Ing. et al**
**Schlossmühlendamm 1**
**W-2100 Hamburg 90 (DE)**

EP 0 253 826 B1

## Beschreibung

Die Erfindung betrifft ein Verfahren zur Ermittlung mechanischer Fehlstellen, Dehnungen, Brüche od. dgl. von Bewehrungsstäben oder Ankern sowie von Wassereinwirkung auf diese, die aus einem Faserverbundmaterial aus einer Harzmatrix mit eingebundenen Fasern bestehen.

Es ist bekannt, z.B. im Spannbetonbau Bewehrungsstäbe und Anker aus Faserverbundmaterial einzeln oder in Bündel einzusetzen. Bei derartigen Bewehrungsstäben besteht das Problem, daß an diesen auftretende Fehlstellen wie Verletzungen, Brüche und Wassereinwirkungen insbesondere dann nicht festgestellt werden können, wenn die Bewehrungsstäbe nach dem Einbau nicht mehr zugänglich sind. Dies kann z.B. bei Spannbündeln im Spannbetonbau der Fall sein, die nach dem Anspannen verpreßt werden. Brüche einzelner Stäbe in solchen Bündeln machen sich am Spannbündelende bzw. an den Spannbündelverankerungen nicht bemerkbar und können daher mit üblichen Überwachungsmethoden nicht festgestellt werden. Derartige Fehlstellen reduzieren aber die Sicherheit des Bauteils eines Bauwerks. Erst bei einer größeren und dann gegebenenfalls bereits bedenklichen Zahl von Brüchen in größeren Bündeln zeigt das Bauteil selbst äußere Reaktionen durch z.B. erhöhte Durchbiegungen oder Risse. Ferner ist es nicht möglich, eine örtlich begrenzte Wassereinwirkung an hochbeanspruchten Stäben aus Faserverbundmaterial zu ermitteln, was ein besonderer Nachteil ist. Eine derartige Wassereinwirkung kann zu einer Schädigung der hochbeanspruchten Bewehrungsstäbe führen.

In der US-A-43 48 635 ist eine Anordnung beschrieben, durch die Materialtrennungen in Erd- oder Gebirgsformationen nachträglich geortet werden können. Hierzu wird in ein Bohrloch ein Meßelement eingeführt und vermörtelt, durch das über Kapazitätsmessung die Lage der Bruchstelle ermittelt werden kann. Die Meßelemente haben den bekannten Aufbau von Kondensatoren. Sie bestehen aus flachen Metallfolienstreifen mit einem dazwischen geschalteten Dielektrikum aus Papier oder Kunststoff-Folie. Ferner wird ein weiterer Kondensator mit koaxialem Aufbau beschrieben. Dieser weist einen mittigen Leiter mit einer kreisförmigen äußeren Leitoberfläche auf. Auf dieser befindet sich koaxial zum mittigen Leiter ein rohrförmiges Dielektrikum mit gleichförmiger Wanddicke. Auf dem Dielektrikum ist ein äußerer muffenförmiger Leiter angeordnet, der von einer Schutzhülle umgeben ist. Diese Kondensatoren sind aufwendig im Aufbau und bei der Herstellung in größeren Mengen verhältnismäßig teuer. Aufgrund ihrer Querschnittsabmessungen können sie auch nur in größeren Bohrlöchern von Erd- oder Gebirgsformationen eingesetzt werden. In der GB-A-21 52 088 ist ferner ein Seil aus einem Bündel von Fasern beschrieben, in dem mindestens ein elektrischer Leiter angeordnet ist. Eine Beschädigung des Seiles wird dadurch ermittelt, daß eine Unterbrechung des Stromflusses durch den Leiter eintritt. Es kann somit nur ermittelt werden, daß ein Bruch des Leiters an irgend einer Stelle erfolgt ist. Eine Lokalisierung der Bruchstelle ist aber nicht möglich. Der gemeinsame Nachteil dieser bekannten Anordnungen besteht darin, daß Fehlstellen durch z.B. auf die Oberfläche begrenzte Delaminierungen eines Faserverbundstabes an einem sonst nicht gebrochenen Stab nicht geortet werden können. Es ist auch eine gleichzeitige Ermittlung linearer Dehnung z.B. aus Last- und Temperatureinwirkungen nicht möglich.

Die Aufgabe der Erfindung besteht darin, ein Verfahren der eingangs genannten Art aufzuzeigen, mittels dem Fehlstellen oder Brüche an Bewehrungsstäben oder Ankern aus Faserverbundmaterial aus einer Harzmatrix mit eingebundenen Fasern leicht und einfach auch hinsichtlich ihrer örtlichen Lage ermittelt werden können, sowie einen Bewehrungsstab oder Anker so auszubilden, daß er zur Durchführung des Verfahrens geeignet ist.

Erfindungsgemäß erfolgt die Lösung der Aufgabe bezüglich des Verfahrens durch die kennzeichnenden Merkmale des Anspruchs 1 und bezüglich des Bewehrungsstabs oder Ankers durch die kennzeichnenden Merkmale des Anspruchs 7. Vorteilhafte Ausgestaltungen der Erfindung werden in den abhängigen Ansprüchen beschrieben.

Nach der Erfindung können lineare Materialdehnungen auf der Basis von Kapazitätsmessungen bestimmt werden. Es ist eine gleichzeitige Ermittlung von Dehnung, mechanischen Fehlstellen und einer Wassereinwirkung auf einen Bewehrungsstab oder Anker aus Faserverbundmaterial in Verbindung mit einer Lokalisierung der Schäden möglich.

Die Erfindung wird nachstehend anhand der in den Zeichnungen dargestellten Bewehrungsstäbe näher erläutert. Es zeigt:

Fig. 1 eine Meßvorrichtung mit einem Bewehrungsstab in einer schematischen schaubildlichen Ansicht,

Fig. 2a einen Bewehrungsstab in einer Queransicht im Schnitt,

Fig. 2b eine Übersicht über weitere Ausbildungen eines Bewehrungsstabs in einer Queransicht im Schnitt,

Fig. 3 einen Bewehrungsstab in einer schematischen Draufsicht,

Fig. 4a die Anordnung eines Paares von Drähten auf dem Umfang eines Bewehrungsstabes in einer vergrößerten Detailansicht,

Fig. 4b die Anordnung eines einzelnen Drahtes, einer Faser oder eines Faserbündels in der Randzone eines Bewehrungsstabs in einer vergrößerten Detailansicht.

Fig. 5 einen Bewehrungsstab mit über dessen Länge gestaffelt angeordneten Paaren von Drähten in einer schematischen Darstellung.

Fig. 6 einen Bewehrungsstab mit einem als Schleife ausgebildeten Paar von Drähten in einer schematischen Darstellung.

Fig. 7 einen Bewehrungsstab mit auf dem Umfang angeordneten Bändern von Drähten in einer Queransicht im Schnitt.

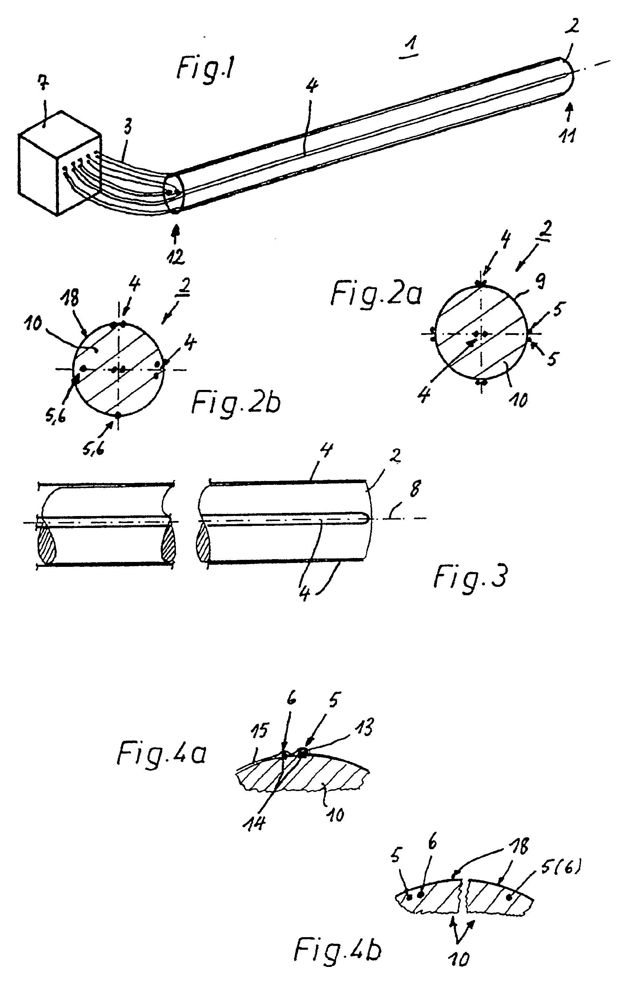

Die Meßvorrichtung 1 zur Ermittlung von Verletzungen oder Brüchen sowie von Wassereinwirkung an unzugänglich eingebauten Bewehrungsstäben 2 aus Faserverbundmaterial besteht aus einem als Sensorstab ausgebildeten Bewehrungsstab 2 sowie einem Meßgerät 7. Der Sensorstab ist ein üblicher Bewehrungsstab 2, in den bei der Stabherstellung z. B. im Düsenziehverfahren in Stablängsrichtung auf ganzer Länge in den Kern 10 ein Paar 4 von Drähten 5, 6 eingelegt wurde. Statt der Drähte 5, 6 können auch Bänder, Fasern, Faserbündel oder leitende Rovings aus z.B. Glasfaser verwendet werden. Ferner können in der Randzone des Querschnitts oder auf dem Umfang 9 des Bewehrungsstabs 2 im Abstand voneinander Paare 4 von Drähten 5, 6 oder einzelne Drähte angeordnet werden (Fig. 1).In Fig. 2a und 2b ist jeweils ein Bewehrungsstab 2 in einer Queransicht im Schnitt schematisch dargestellt. In Fig. 2a sind Paare 4 von Drähten 5, 6 auf dem Umfang 9 des Bewehrungsstabs 2 angeordnet. Im Mittelpunkt des Kerns 10 ist ebenfalls ein Paar 4 von Drähten 5, 6 vorgesehen. Fig. 2b zeigt Varianten bezüglich der Anordnung von Paaren 4 von Drähten 5, 6 bzw. von Einzeldrähten 5, 6. So ist es möglich, die Paare 4 von Drähten 5, 6 auch in der Randzone 18 des Bewehrungsstabs 2 oder aber unterhalb der Randzone 18 im Bereich des Kerns 10 anzuordnen. Fernen können auch einzelne Drähte 5, 6 vorgesehen werden, die auf der Randzone 18, unter der Randzone 18 oder aber im Bereich der Randzone 18 des Bewehrungsstabs 2 eingelegt werden.An dem einen Stabende 11 sind die jeweiligen Drähte 5, 6 der Paare 4 von Drähten elektrischleitend miteinander verbunden. Das Stabende 11 kann jenes sein, das sich beim Einbau des Bewehrungsstabs 2 in das Bauteil am nicht oder weniger zugänglichen Abschnitt befindet. Die Drähte 5, 6 bestehen vorzugsweise aus einem korrosionsbeständigen Werkstoff wie z. B. einer Kupferlegierung. Ihre Dicke beträgt in der Regel 0,1 bis 0,5 mm. Sofern nicht isolierte Drähte 6 verwendet werden, ist ein Drahtabstand von mindestens 1 mm zu wählen. Bei den Drähten 5 muß die Isolierung 13 schubfest mit der Drahtoberfläche verbunden sein, damit bei einem Bruch des Bewehrungsstabes die Durchtrennung des mit der Isolierung 13 versehenen Drahtes 5 nicht verhindert wird. Um eine ganzflächige Verbindung der Drähte 5, 6 mit der Oberfläche des Bewehrungsstabes 2 zu erzielen, werden die Drähte 5, 6 über ihre gesamte Länge mittels eines Klebers 14 mit dem Bewehrungsstab 2 verbunden. Es ist möglich, um den Bewehrungsstab 2 mit den am Umfang 9 angeordneten Drähten 5, 6 eine Schutzhülle 15 zu legen und diese ebenfalls fest am Umfang 9 des Bewehrungsstabs 2 anzuordnen (Fig. 4 a). In Fig. 4b ist schematisch dargestellt, daß das Paar 4 von Drähten 5, 6 oder aber auch einzelne Drähte 5, 6 unter der Randzone 18 in den Kern 10 des Bewehrungsstabs 2 integriert angeordnet werden können.

Mit der Meßvorrichtung 1 ist es möglich, an dem Bewehrungsstab 2 verschiedene Meßvorgänge durchzuführen. Mittels einer Schwachstromquelle mit einer Anzeigelampe oder einem Amperemeter kann festgestellt werden, ob ein Stabbruch oder mehrere Brüche von Querschnittsteilen erfolgt sind. Hierzu wird das Meßgerät 7 mittels der Anschlußstücke 3 mit den Drähten 5, 6 der Paare 4 von Drähten verbunden und der Stromfluß kontrolliert. Wenn der Stromfluß unterbrochen ist, ist dies ein Nachweis dafür, daß ein Bruch eines Drahtes des jeweiligen Paares 4 von Drähten und damit auch ein Bruch im Bewehrungsstab 2 erfolgt ist.

Um die genaue Lage der Bruchstelle relativ zum Stabende 12 bestimmen zu können, kann als Meßgerät 7 ein Kapazitätsmeßgerät verwendet werden. Dieses Meßprinzip beruht auf der Abhängigkeit der Kapaziät eines Kondensators von seiner Fläche sowie der Erkenntnis, daß sich auf parallel verlegte gegeneinander isolierte Drähte analog zu Flächenkondensatoren verhalten. Bei Einsatz eines Kapazitätsmeßgeräts ist es daher erforderlich, daß die jeweils zu überprüfenden Drähte 5 eines Paares 4 von Drähten sich an dem Bewehrungsstab 2 parallel und mit konstantem Abstand zueinander befinden. Sofern der Bewehrungsstab 2 und damit einer der Drähte 6 reißt, kann aus der Änderung der Kapazität auf dem Bruch um die Lage der Bruchstelle geschlossen werden. Hierbei wurde festgestellt, daß zwischen der jeweiligen Länge des Bewehrungsstabs 2 und der zu messenden Kapazität eine lineare Beziehung besteht. Zur Feststellung von Brüchen ist es erforderlich, daß bei einer örtlichen Delaminierung des Bewehrungsstabes 2 der jeweils eingelegte Draht 5, 6; 6, 6; 5, 5 eines Paares 4 von Drähten sich nicht auf einer größeren Stablänge im Bruchbereich von der Harzmatrix lösen kann, da sonst die Drähte die Verlängerung über Fließen abbauen könnten und daher nicht durchtrennt würden. In diesem Fall wäre eine meßtechnische Erfassung der Bruchstelle nicht möglich.

Mittels der Meßvorrichtung 1 kann auch die mittlere Dehnung eines Bewehrungsstabes 2 bzw. die tatsächliche Dehnung bei geradlinig gespannten Bewehrungsstäben 2 über die Widerstandsänderung einer integrierten Drahtschleife bestimmt werden, die als Paar 4 von Drähten 5, 5; 5, 6; 6, 6 ausgebildet sein kann. Der Zusammenhang zwischen der Widerstandsänderung und der Dehnung des Bewehrungsstabs 2 kann über ein Eichung eines Einheitsstababschnittes ermittelt werden.

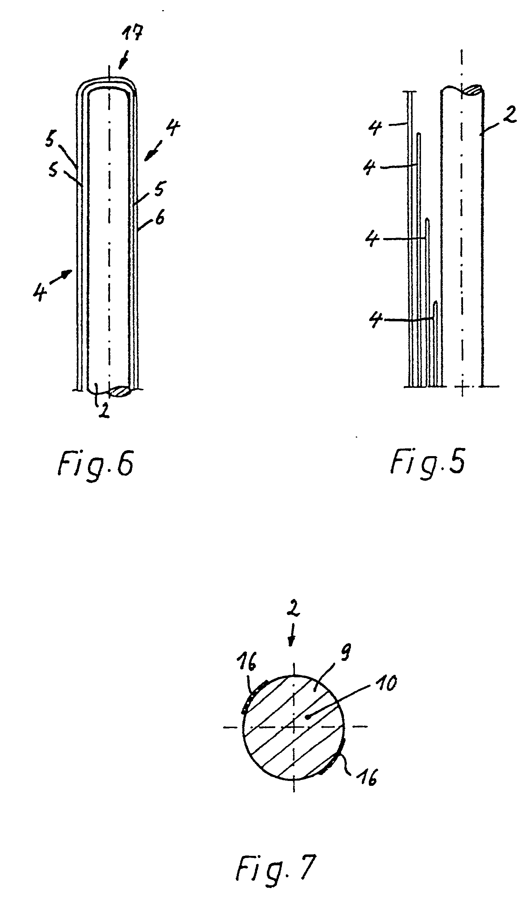

Wassereinwirkung auf Bewehrungsstäbe 2 aus Faserverbundmaterial kann diese schädigen und insbesondere die Bruchgefahr fördern. Mittels der Meßvorrichtung 1 ist es möglich, eine Wassereinwirkung auf den Bewehrungsstab 2 zu ermitteln. Die äußere Einwirkung von Wasser auf den Bewehrungsstab 2 kann sowohl durch Messung der Widerstandsänderung von dem Wert Unendlich bis auf einen meßbaren Wert wie auch durch Änderung der Kapazität ermittelt werden. Hierzu dienen die an dem Umfang 9 des Bewehrungsstabs 2 angeordneten Paare 4 von Drähten, wobei jeweils ein Draht 6 nicht isoliert ist. Die drähte 5, 6; 6,6 und / oder Paare 4 von Drähten können auch in und / oder entlang des Bewehrungsstabs 2 in der Länge gestaffelt angeordnet sein ( Fig. 5). Eine Wassereinwirkung an dem Bewehrungsstab 2 kann hierdurch leicht örtlich dadurch fixiert werden, daß die einzelnen Paare 4 von Drähten durchgemessen werden. Eine Wassereinwirkung liegt örtlich jeweils vor dem Bereich des Endabschnittes des Paares 4 von Drähten, daß zuletzt durchgemessen wurde und einen Widerstand mit dem Wert unendlich aufwies. Es ist auch möglich, ein Paar 4 von Drähten 5,5; 6,6 zu einer Schleife 17 zu verbinden, die den gesamten Bewehrungsstab 2 in der Länge umgibt. Im Kern 10 des Bewehrungsstabs 2 vorgesehene Paare 4 von Drähten 5,6; 6,6 können ebenfalls mit der Schleife 17 verbunden sein. Bei einer Wassereinwirkung auf den Bewehrungsstab 2 sind die Widerstandsänderungen beim messen von den Endabschnitten des Paars 4 von Drähten unterschiedlich, was von der Lage der Durchfeuchtungsstelle abhängig ist. Aus diesen unterschiedlichen Widerstandsmeßwerten kann dann die örtliche Lage der Durchfeuchtungsstelle ermittelt werden ( Fig. 6).

Statt einzelner Paare 4 von Drähten 5,6; 6,6 können auch Fasern, Faserbündel, elektrisch leitende Rovings wie Glasfaserrovings oder Bänder 16 von Drähten verwendet werden, die an dem Umfang 9 des Bewehrungsstabs 2 angeordnet werden ( Fig. 7). Sowohl die Paare 4 von Drähten wie auch die Bänder 16 können aus korrosionsbeständigen metallischen Werkstoffen, wie zum Beispiel den bereits erwähnten CU-Legierungen wie auch aus nichtmetallischen Werkstoffen wie zum Beispiel Kohlenstoffverbindungen od. dgl. bestehen. Im letzteren Fall können die Bänder 16 aus Kohlenstoffasern hergestellt werden, wodurch die Bänder 16 einen extrem hohen elektrischen Widerstand aufweisen. Diese Bänder 16 eignen sich besonders gut zur Ermittlung von Durchfeuchtungsstellen am Bewehrungsstab 2.

Die Meßvorrichtung 1 sowie die mit dieser möglichen Meßverfahren können nicht nur bei einseitig zugänglichen Bewehrungsstäben 2 bzw. Bündel von Bewehrungsstäben 2 eingesetzt werden. Ein Einsatz ist auch möglich bei völlig umschlossenen einzelnen Bewehrungsstäben 2 oder Bündeln von Bewehrungsstäben 2. In diesem Fall wird ein Kontrollkabel vorgesehen, das an die Anschlußstücke 3 der Bewehrungsstäbe 2 angeschlossen und durch die äußere Ummantelung nach außen gefürt wird. Es ist auch möglich, die Anschlußstücke 3 aus dem Bauteil herauszuführen und außen mit dem Kontrollkabel zu verbinden. Darüberhinaus ist es auch möglich, die Meßvorrichtung 1 mit den zugehörigen Meßverfahren bei unzuganglichen Erdankern oder unzugänglichen Bauwerken im Erdreich anzuwenden.

**Patentansprüche**

1. Verfahren zur Ermittlung mechanischer Fehlstellen, Dehnungen, Brüche od. dgl. von Bewehrungsstäben oder Ankern sowie von Wassereinwirkung auf diese, die aus einem Faserverbundmaterial aus einer Harzmatrix mit eingebundenen Fasern bestehen, bei dem in den Bewehrungsstab oder den Anker als elektrisch leitfähige Elemente mindestens zwei Drähte elektrisch leitfähiger Fasern, Faserbündel oder Bänder eingelegt und dann nach Einbau des Bewehrungsstabes am Einbauort von einem freien Ende des Bewehrungsstabes Kapazitätsmessungen an den eingelegten Leitern durchgeführt werden.

2. Verfahren nach Anspruch 1, wobei in der Randzone des Querschnitts des Bewehrungsstabes oder Ankers mindestens ein Draht, eine leitfähige Faser, ein leitfähiges Faserbündel oder ein leitfähiges Band eingeklebt wird.

3. Verfahren nach Anspruch 1, wobei die Drähte, Paare von Drähten oder Bänder von Drähten entlang des Bewehrungsstabes oder Ankers in der Länge gestaffelt verlegt werden.

4. Verfahren nach Anspruch 1 bis 3, wobei die Paare von Drähten aus einem Draht mit Isolierung und einem Draht ohne Isolierung bestehen.

5. Verfharen nach Anspruch 1 und 2, wobei als Faserbündel einzelne elektrisch leitfähig ausgerüstete Glasfaserrovings in den Bewehrungsstab oder Anker eingelegt werden.

6. Verfahren nach Anspruch 2 und 3, wobei auf dem Umfang des Bewehrungsstabs oder Ankers Bänder mit hohem elektrischen Widerstand angeordnet werden.

7. Bewehrungsstab oder Anker aus Faserverbundmaterial zur Durchführung des Verfahrens nach den Ansprüchen 1 bis 6, mit einem elektrisch leitfähigen Element, das an einem Endabschnitt des Bewehrungsstabes oder Ankers mit einer Kapazitätsmeßeinrichtung verbindbar ist, bei dem das Faserverbundmaterial des Stabes (2) aus einer Harzmatrix mit eingebundenen Fasern besteht und in dem Kern (10) und/oder am Umfang (9) des Stabes (2) parallel zu dessen Längsachse (8) ein oder mehrere Paare (4) oder Bänder (16) dünner Drähte (5, 6; 6, 6), Fasern oder Faserbündel aus elektrisch leitfähigem Werkstoff mit ggf. oberflächenseitig schubfester Isolierung (13) zu dem einen Stabende gerichtet angeordnet und an dem anderen Stabende (12) aus dem Stab (2) oder dem den Stab (2) aufnehmenden Bauteil herausgeführt sind.

8. Bewehrungsstab oder Anker nach Anspruch 7, wobei die Drähte (5, 5; 6, 6) und/oder Paare (4) oder Bänder (16) von Drähten, Fasern oder Faserbündel in der Länge gestaffelt angeordnet sind.

9. Bewehrungsstab oder Anker nach Anspruch 7 und 8, wobei die Drähte (5, 5; 6, 6) und/oder Paare (4) oder Bänder (16) von Drähten, Fasern oder Faserbündel im Stab (2) miteinander elektrisch leitend zu Schleifen (17) verbunden sind.

10. Bewehrungsstab oder Anker nach Anspruch 7, wobei als elektrisch leitfähige Elemente einzelne elektrisch leitfähig ausgerüstete Glasfaserrovings in den Stab (2) eingelegt sind.

## Claims

1. Process for detection of the position of mechanical defects, elongations, breaks or the like as well/as water effects of armour bars and load-bearing fixtures, the armour bars and load-bearing fixtures being made of a fiber composite material of resinous compound with bonded in fibers at which in the armour bar or the load-bearing fixture as electrical measuring elements at least two wires of conductive fibers, bunches of conduction fibers or bands are inserted and then after mounting of the armour bar at the place of mounting from one free end of the armour bar measurements of capacity at the inserted conductors are arranged.

2. Process according to claim 1, at which at least one wire, one conductive fiber, one conductive bunch of fibers, or one conductive band ist fixed in the cross-sectional rim zone of the armour bar or the load-bearing fixture.

3. Process according to claim 1, at which the wires, pairs of wires, or bands of wires are placed along the armour bar or load-bearing fixture graduated lengthwise.

4. Process according to claim 1 to 3, at which the pairs of wires consist of one wire with an isolation and one wire without an isolation.

5. Process according to claim 1 and 2, at which single conductive glass fiber rovings are inserted in the bar or load-bearing fixture as bunch of fibers.

6. Process according to claim 2 and 3 at which bands with high electrical resistance are arranged on the surface of the armour bar or load-bearing fixture.

7. Armour bar or load-bearing fixture of fiber composite for realization of the process according to claims 1 to 6, with an electroconductive element which is connected to a capacity measuring device at one end of the armour bar or load-bearing fixture, at which the composite of the bar (2) is of resinous compound with bonded in fibers and one or more pairs (4) or bands (16) of thin wires (5,6;6,6), fibers or bunches of electroconductive material possibly with an insolation (13) firmly joined with the wire surface, being arranged in the core (10) and/or at the periphery (9) of the bar (2) are oriented to one end of the bar and free at the other end (12) of the bar (2) or the structural member inserting the bar (2).

8. Armour bar ar load-bearing fixture according to claim 7 at which the wires (5,6;6,6) and/or pairs (4) or band (16) of wires, fibers, or bunches of fibers are arranged graduated lengthwise.

9. Armour bar or load-bearing fixture according to claim 7 and 8 at which the wires (5,6;6,6), fibers, or bunches of fibers of the pairs (4) or bands (16) of wires, fibers or bunches of fibers in the bar (2) connected to electroconductive loops.

10. Armour bar or load-bearing fixture according to claim 7, at which single conductive glass fiber rovings are inserted in the bar as electroconductive elements.

## Revendications

1. Procédé pour détecter des points de défauts mécaniques, des dilatations, des cassures, ou similaires, de barres d'armature ou d'ancrages, lesquels sont constitués de matériau composite, renforcé par des fibres, à matrice de résine avec des fibres incorporées, ainsi que pour détecter l'action de l'eau sur ceux-ci, procédé dans le cas duquel, dans la barre d'armature ou dans l'ancre, on incorpore, comme éléments conducteurs de l'électricité, au moins deux fils de fibres, de faisceaux de fibres, ou de bandes, conducteurs de l'electricité, puis ensuite, après mise en place de la barre d'armature, on effectue, sur le site d'implantation d'une extrémité libre de la barre d'armature, des mesures de capacité sur les conducteurs intégrés.

2. Procédé suivant la revendication 1, pour lequel au moins un fil, une fibre conductrice, un faisceau de fibres conducteur ou une bande conductrice sont collés dans la zone du bord de la section de la barre d'armature ou de l'ancrage.

3. Procédé suivant la revendication 1, pour lequel les fils, paires de fils, ou bandes de fils, sont déposés de façon à être échelonnés suivant la longueur, le long de la barre d'armature ou de l'ancrage.

4. Procédé suivant les revendications 1 à 3, pour lequel les paires de fils sont constituées d'un fil avec isolation et d'un fil sans isolation.

5. Procédé suivant la revendication 1 et la revendication 2, pour lequel, comme faisceaux de fils, des stratifils de verre textile, séparés, et équipés pour être conducteurs de l'électricité, sont intégrés dans la barre d'armature ou l'ancrage.

6. Procédé suivant la revendication 2 et la revendication 3, pour lequel, sur la périphérie de la barre d'armature ou de l'ancrage, on a disposé des bandes ayant une résistance électrique élevée.

7. Barre d'armature ou ancrage, en matériau composite renforcé par des fibres, pour l'exécution du procédé suivant les revendications 1 à 6, comportant un élément conducteur de l'électricité, que l'on peut raccorder, à une section d'extrémité de la barre d'armature ou de l'ancrage, avec un dispositif de mesure de capacité, pour lequel le matériau composite, renforcé par des fibres, de la barre (2) est constitué d'une matrice en résine comportant des fibres incorporées et, pour lequel, dans le coeur (10) et/ou sur la périphérie de la barre 2, parallèlement à son axe longitudinal (8), sont disposées une ou plusieurs paires (4) ou bandes (16) de fils fins (5, 6; 6, 6), de fibres ou faisceaux de fibres en matière conductrice de l'électricité, comportant, le cas échéant, une isolation (13) en surface, résistant au cisaillement, de façon à être dirigés vers l'une des extrémités de la barre, et à sortir, à l'autre extrémité (12), de la barre (2), ou de la pièce de construction recevant la barre (2).

8. Barre d'armature ou ancrage suivant la revendication 7, pour lequel les fils (5, 6; 6, 6) et/ou les paires (4) ou bandes (16) de fils, de fibres ou de faisceaux de fibres, sont disposés de façon échelonnée sur la longueur.

9. Barre d'armature ou ancrage suivant la revendication 7 et la revendication 8, pour laquelle les fils (5, 6; 6, 6) et/ou les paires (4) ou bandes (16) de fils, de fibres ou de faisceaux de fibres, dans la barre (2), sont raccordés à des boucles (17) de façon à conduire l'électricité entre eux.

10. Barre d'armature ou ancrage suivant la revendication 7, pour laquelle, comme éléments conducteurs de l'électricité, on a intégré dans la barre (2) des stratifils de verre textile, séparés, et équipés pour être conducteurs de l'électricité.

Fig.1

Fig.2a

Fig.2b

Fig.3

Fig.4a

Fig.4b

*Fig.6*

*Fig.5*

*Fig. 7*